# EUROPEAN PATENT APPLICATION

(11) **EP 3 683 972 A1**
(43) Date of publication of application: **22.07.2020**
(21) Application number: 19465502.3
(22) Date of filing: 16.01.2019
(51) Int. Cl.: H04B 5/00, B60L 53/12

(54) **STATION FOR CHARGING A MOBILE DEVICE, VEHICLE AND METHOD TO OPERATE A STATION FOR CHARGING A MOBILE DEVICE**

(71) Applicant: Continental Automotive GmbH, 30165 Hannover (DE)
(72) Inventor: Saracin, Cristian, 300446 Timisoara (RO); Burlacu, Bogdan Alexandru, 300756 Timisoara (RO)

(57) **Abstract**

The invention is concerned with a station (1) for charging a mobile device (9). The station (1) is configured to in one of a communication mode (S4) and a charging mode (S8) at a same time. In the communication mode (S4), the station (1) is configured to wirelessly send data and/or to wirelessly receive data. In the standard charging mode (S8), the station (1) is configured to wirelessly charge the mobile device (9). The station (1) is configured to activate the communication mode (S4), when a communication test (S2) is positive, and to activate the standard charging mode (S8), when a charging test (S3) is positive. The invention is characterized in that the station (1) is configured to perform both the communication test (S2) and the charging test (S3) in a cyclic main loop and if one of the tests (S2, S3) is positive to interrupt the cyclic main loop.

## Description

The invention is concerned with a station for charging a mobile device, a vehicle comprising the station for charging the mobile device and a method for operating the station for charging the mobile device.

A vehicle may comprise interfaces to allow a communication between an on-board computer of the vehicle and a mobile device. Usually, such an interface may be used to synchronize user data, such as contacts and addresses, between the mobile device and the on-board computer of the vehicle. One possible protocol for wireless communication is the Near-field communication (NFC) standard. Near-field communication is based on electromagnetic induction, wherein an electromagnetic field with a frequency of 13.56 MHz is used. Near-field communication requires a distance of less than 10 centimeters between two devices. Since communication works via loop antennas, the best connection between two devices is achieved by a congruent arrangement of the two loop antennas.

A vehicle may also comprise a charging station that supports wireless charging of mobile devices using Qi standard or other wireless charging standards. Wireless charging is also based on electromagnetic induction, wherein an electromagnetic field generated by the charging station causes induction in a loop antenna of the mobile device. The frequency of the electromagnetic field is between 110 and 205 kHz.

Due to insufficient filtering of the NFC antenna, the mobile device may erroneously detect a NFC signal during wireless charging. The reason for the detection of a NFC signal during charging is the fact, that the electromagnetic charging field is detected by a communication loop antenna of the mobile device. For that reason, it is disadvantageous to perform wireless charging and NFC communication at the same time at a same terminal. Devices which are configured both for wireless loading and for wireless communication, have to deactivate one of the two functions during operation. Usually, manual switching by a user is necessary to select the desired function.

It is an object of the present invention to provide an automatic selection of the function of a terminal.

The object is accomplished by the subject matter of the independent claims. Advantageous developments with convenient and non-trivial further embodiments of the invention are specified in the dependent claims, the following description, and the drawings.

The invention comprises a station for charging a mobile device. The station is configured to operate in a communication mode and in a standard charging mode. The station is configured to operate in one of the communication mode and the standard charging mode at a given time. In other words, the station is configured to operate the communication mode and the standard charging mode in a mutual exclusive manner by excluding the operation of both the communication mode and the standard charging mode at the same time. Either the communication mode or the standard charging mode or none of both may be active in the station at a given point in time, but not both of them at the same time.

In the communication mode, the station is configured to wirelessly send data to the mobile device and/or to wirelessly receive data from the mobile device according to a wireless communication protocol. In the standard charging mode, the station is configured to wirelessly charge the mobile device according to a wireless charging protocol. The station is configured to activate the communication mode, when a communication test of a presence of a communication request is positive. The station is configured to activate the standard charging mode, when a charging test of a presence of a charging request is positive. The station is configured to perform both the communication test and the charging test in a cyclic main loop. If one of the tests is positive, the station interrupts the cyclic main loop.

In other words, the station is configured to communicate with the mobile device and to charge the mobile device. In order to communicate with the mobile device, the station has to operate in the communication mode. In order to charge the mobile device, the station has to operate in the standard charging mode. The station uses the wireless communication protocol to exchange data with the mobile device. The station uses the wireless charging protocol to charge the mobile device. The communication mode and the standard charging mode cannot operate simultaneously. In order to initiate the wireless communication with the mobile device or the wireless charging of the mobile device, the station performs the tests to check the presence of the requests. When the station detects the presence of the communication request during the communication test, the station activates the communication mode. When the station detects the presence of the charging request, the station activates the standard charging mode. It is intended, that the station is configured to perform the communication test and the charging test serially in the cyclic main loop. When the station detects the presence of the communication request or the presence of the charging request, the cyclic main loop is paused and the corresponding mode is activated.

The invention has the advantage, that the station can automatically activate the communication mode and the standard charging mode, when the respective request is detected by the station.

The station may comprise a loop antenna for wireless charging and another loop antenna for wireless communication. The loop antennas may surround or cover the same area. The station may be configured to charge the mobile device by generating an alternating electromagnetic field using the charging loop antenna. The station may charge the mobile device according to one or more predefined charging modes. In the standard charging mode, the station may charge the mobile device with a default or maximum transfer power according to a predefined charging standard or protocol. In order to detect the mobile device and the presence of the charging request, the station may perform the charging test for wireless charging. The charging test may comprise a polling process, defined by the wireless charging protocol. When the station detects the presence of the charging request during the charging test, the station may activate the standard charging mode and provide the electromagnetic field to charge the mobile device with the default or maximum transfer power. The charging request may be detected by the station by measuring an influence of a loop antenna of the mobile device on the electromagnetic field.

When the station detects the presence of the communication request the station may activate the communication mode and initiate a communication process with the mobile device. The communication test may comprise a polling process according defined by the wireless communication protocol. The communication process may include a generation or reception of an electromagnetic field via the communication loop antenna. The station may perform the communication test and the charging test in an alternating order. The tests may be repeated in the cyclic main loop. The periodic time of the cyclic main loop can be between 100ms to 600ms or up to 3s.

The invention also comprises embodiments that provide features which afford additional technical advantages.

In accordance with a further embodiment, the station is configured to resume the main loop, when both the communication mode and the standard charging mode are deactivated. In other words, the station continues with the cyclic main loop, when the communication mode and the standard charging mode are finished. This embodiment provides the advantage that the cyclic main loop continues, when the communication with the mobile device or the charging of the mobile device has finished. As an example, the station may be configured to interrupt the cyclic main loop in order to communicate with the mobile device. The station may deactivate the communication mode when the station receives a signal to end the communication mode or in case of a timeout during communication process. The station may end the communication mode, when a predefined use case has finished. A use case may be a Bluetooth pairing process, a Wi-Fi pairing process or an engine start process. When the communication mode is deactivated by the station, the station may continue with the main loop by performing the charging test.

In accordance with a further embodiment, the wireless communication protocol comprises the Near Field Communication (NFC) protocol. In other words, the station is configured to communicate with the mobile device using the NFC standard. The embodiment has the advantage, that the station is configured to use one of the common protocols for wireless communication.

According to a further embodiment, the wireless charging protocol comprises the Qi protocol standard. In other words, the station is configured to use the Qi protocol for wireless charging. The embodiment has the advantage that a common standard, used by many mobile devices, is used by the station. As an example, the station may send and receive signals of the Qi protocol in order to test the presence of a charging request of the mobile device.

According to a further embodiment, the station is configured to operate in a reduced charging mode, wherein a reduced transfer power of the reduced charging mode is below a power transfer of the standard charging mode. The station is configured to operate in the reduced charging mode and the communication mode simultaneously. In other words, the station can activate the reduced charging mode and the communication mode at the same time in order to both charge the mobile device and communicate with the mobile device at the same time. The station is configured to charge the mobile device in the reduced charging mode with the reduced transfer power of the electromagnetic charging field which is lower than a transfer power of the standard charging mode. The reduced transfer power is limited by a predefined value. The transfer power of the reduced charging mode may be 5% to 70% of the transfer power of the standard charging mode. The reduced charging mode and the communication mode may be active at the same time. The embodiment has the advantage, that wireless communication and wireless charging is possible at the same time. As an example the charging modes comprise the standard charging mode and the reduced charging mode. The station can operate in the communication mode or perform the communication test together with the reduced charging mode at the same time. The station may activate the reduced charging mode in order to charge the mobile device with the reduced transfer power which is lower than the transfer power that is used in the standard charging mode. The electromagnetic charging field may disturb the communication process, when the power of the electromagnetic charging field is above the predefined value. In order to communicate with the mobile device during wireless charging, the charging power may be set below the predefined value in order to avoid failures during the communication process.

According to a further embodiment, starting from the standard charging mode, the station (1) is configured to perform a cyclic auxiliary loop which comprises
- interrupting the standard charging mode,
- performing the communication test and,
- if the test is negative, continuing the standard charging mode, and
- if the test is positive, interrupting the cyclic auxiliary loop and switching into the communication mode.
In other words, the station is configured to pause the standard charging mode in order to perform the communication test in the cyclic auxiliary loop, until the station recognizes the presence of the communication request in the communication test. The embodiment has the advantage, that the station may suspend the standard charging mode, when the mobile device requests a communication request during charging. As an example the station may interrupt the standard charging mode with a predefined frequency of 500ms to 1s. When the standard charging mode is interrupted, the station may perform the communication test in order to detect the presence of the communication request. If the station does not detect the communication request during a predefined time, which may be between 100ms to 200ms, the station may resume the standard charging mode. When the station detects the communication request, the station can initiate the communication mode. The station can stop interrupting the standard charging mode once the communication mode is complete.

According to a further embodiment, the station is configured to activate the reduced wireless charging mode during the interruption of the cyclic auxiliary loop. In other words, the station switches from the standard charging mode to the reduced charging mode at a predefined frequency in order to check the presence of a communication request. The embodiment has the advantage, that the station continues the charging of the mobile device during the interruption of the standard charging mode. As an example, the station may perform the communication test at a predefined frequency. Prior to the communication test, the station may switch from the standard charging mode to the reduced charging mode. When the communication test has finished, the station may switch back to the standard charging mode. When the communication request is detected, the station may activate the communication mode in order to communicate with the mobile device. The reduced charging mode may be active until the communication mode is ended.

According to a further embodiment, the station is configured to proceed with the cyclic auxiliary loop, when the communication mode is deactivated. In other words, the station is configured to continue with the cyclic communication test, when the communication mode is deactivated.

The invention also provides a vehicle comprising an embodiment of the inventive station for charging a mobile device.

The invention also comprises a method to operate a station for charging a mobile device. The method comprises the steps of:
- alternatingly performing both a communication test and a charging test in a cyclic main loop and if one of the tests is positive to interrupt the cyclic main loop,
- activation of a communication mode, when the communication test regarding a presence of a communication request is positive,
- activation of a charging mode, when the charging test regarding a presence of a charging request is positive,
- in the communication mode, wirelessly sending data to the mobile device and/or wirelessly receiving data from the mobile device according to a predefined wireless communication protocol,
- in the standard charging mode, wirelessly charging the mobile device according to a predefined wireless charging protocol, wherein
- the station operates the communication mode and the standard charging mode in a mutual exclusive manner by excluding the operation of both the communication mode and the standard charging mode at the same time.

According to a further embodiment, the station is designed to operate the communication mode and/or the communication test together with a reduced charging mode at the same time, wherein the reduced charging mode comprises a power transfer with a lower power than the standard charging mode.

The invention also comprises the combinations of the features of the described embodiments.

In the following an exemplary implementation of the invention is described. The figures show:
- Fig. 1: a schematic illustration of an embodiment of the inventive station; and
- Fig. 2: a schematic illustration of a method to operate a station.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures elements that provide the same function are marked with identical reference signs.

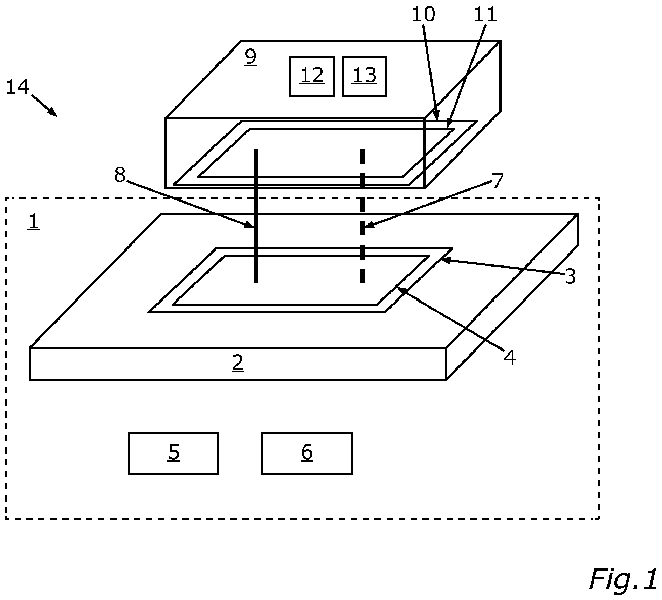

Fig. 1 shows a station for charging a mobile device. The station 1 may comprise a shelf 2 that may be in the form of a flat surface. The station 1 may comprise a charging loop antenna 3 that may be situated under the shelf 2. The charging loop antenna 3 may be configured to create an electromagnetic charging field 7 to charge the mobile device 9. The station 1 may comprise a communication loop antenna 4 that may be configured to provide an electromagnetic communication field 8 to communicate with the mobile device 9. The station 1 may comprise a control unit 5 (ECU) which may be a processor or a microcontroller. The station 1 may comprise a battery 6 to provide energy. The station 1 may be configured to operate in the communication mode S4. During the communication mode S4, the control unit 5 may control the communication loop antenna 4 in order to provide or receive signals via the electromagnetic communication field 8. The station 1 may operate in the standard charging mode S8, wherein the control unit 5 is configured to control the battery 6 and the charging loop antenna 3 to generate the electromagnetic charging field 7 to charge the mobile device 9. The station 1 may be configured to activate the communication mode S4 when the communication test performed by the station 1 detects the presence of the communication request 13 in the mobile device 9. The communication test S2 may comprise the creation of the electromagnetic communication field 8. During the communication test S2, the electromagnetic communication field 8 may induce a current in the communication antenna 11 of the mobile device 9 that may be detected by the mobile device 9. If a communication is requested by the mobile device 9 the mobile device 9 may send the communication request 13 to the station 1 during the communication test S2 by creating an electromagnetic field which may be detected by the communication loop antenna 4 of the station. The communication test S2 may comprise a NFC polling process. When the station 1 detects the communication request 13 during the communication test S2, the control unit 5 may initiate the communication by activating the communication mode of the station 1.

In order to perform the charging test S3, the control unit 5 may control the charging loop antenna 4 in order to create an electromagnetic charging field 7. A charging antenna 10 of the mobile device 9 may detect the electromagnetic charging field 7 and provide the charging request 12 to the station 1 by creating an electromagnetic field. The charging request 12 may include a value of energy that has to be provided by the station 1. The station 1 may perform the communication test S2 and the charging test S3 in the cyclic main loop. The station 1 may be placed in a vehicle 14

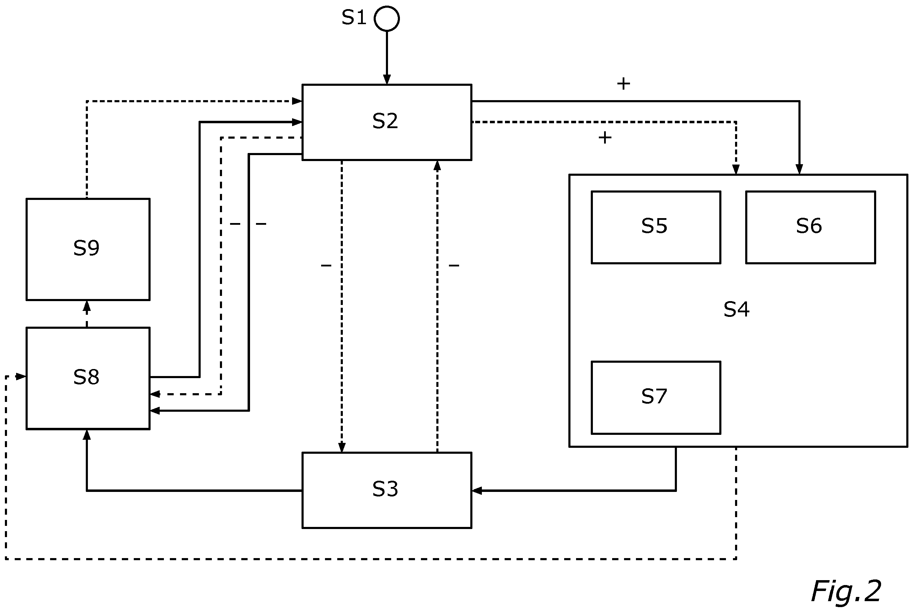

Fig. 2 shows a method to operate the station 1. In a first step S1 the station 1 may activate the cyclic main loop to detect the communication request 13 and the charging request 12.

The communication test S2 may be a polling process used by Near Field Communication standard to initiate a communication process between two devices. During the communication test S2, the station 1 may send or receive signals in order to check the presence of a communication request 13 of the mobile device 9. If the station 1 receives a negative communication request or does not detect the communication request 13 during the communication test S2, the station 1 may end the communication test S2 and perform the charging test S3. If the communication request 13 is detected, the station 1 may activate the communication mode S4 and generate the electromagnetic communication field 8 to communicate with the mobile device 9.

During the charging test S3 the station 1 may send or receive signals according to Qi standard in order to check the presence of the charging request 12. If no charging request 12 is detected during the charging test S3, the station 1 ends the charging test S3 and performs the communication test S2 again. If a charging request 12 is detected, the station 1 may activate the standard charging mode S8 and generate the electromagnetic charging field 7 to charge the mobile device 9.

During the communication mode S4, the station 1 may send and/or receive data using the communication loop antenna 4. The communication mode S4 may be active as long as a predefined use case S5, S6, S7 is active. A possible use case may be a start of an engine of the vehicle by the mobile device 9 (S5). Other use cases may comprise a Bluetooth pairing process (S6) between the mobile device 9 and the vehicle 14 via the station 1 or a Wi-Fi pairing process (S7) between the mobile device 9 and the vehicle 14 via station 1. When the station 1 receives a signal to end communication from the mobile device 9, the station 1 may deactivate the communication mode S4 and perform the charging test S3. The station 1 may end the communication mode S4 when a use case has finished or after a predefined time without communication.

When the station 1 detects the charging request 12 during the charging test S2, the station 1 may activate the standard charging mode S8. During charging mode S8, the station 1 may generate the electromagnetic charging field 7 to supply energy to the mobile device 9. When the standard charging mode S8 has finished, the station 1 may perform the communication test S2 again.

The station 1 may interrupt the standard charging mode S8 to perform the communication test S2 at a predefined frequency. When the station 1 detects the communication request 13 the station 1 may activate the communication mode S4. At the end of the communication mode S4, the station 1 may reactivate the standard charging mode S8.

The station 1 may switch from the standard charging mode S8 to the reduced charging mode S9 to perform the communication test S2. When the communication test S2 is positive, the station 1 may activate the communication mode S4, while the reduced charging mode S9 is active. After the end of the communication mode S4, the station may switch back to the standard charging mode S8. The station (1) can operate the communication mode (S4) or the communication test (S2) together with the reduced charging mode (S9) at the same time.

The state-chart in Fig. 2 describes how an automatic multiplexing mechanism between NFC and WPC would work, in order that the ECU detects and communicates with a smartphone which has these Interfaces enabled. The main advantage is an improved user experience, by eliminating the need to have an HMI button/switch to toggle between NFC and WPC (HMI - human machine interface), or additional NFC touch points (user needs to move the phone between the touch points).Inside vehicles near field communication (NFC) is used for access, start and multimedia functions. Wireless power charging (WPC) is used for charging.

Inside smartphones, NFC antenna is placed usually around the smartphone battery, around the camera or inside smartphones
WPC antenna is placed on the battery. Due to the poor filtering on NFC antenna on smartphone side, smartphones are detecting NFC field, during WPC communication, field which is in fact a spurious harmonic of the WPC field which disturbs the NFC Communication. This leads to the issue that NFC and WPC cannot work in parallel. On products performing NFC and WPC on the same touch point, an external switching mechanism is needed.

Sometimes inside the car, NFC and WPC are part of the same ECU (e.g.: Multifunctional Smart Device Terminal), and the user has to place the phone on the same surface, a so called "touch point" to enable WPC or NFC. Because NFC and WPC communication is not possible in the same time, as described above, switching depends on external input (vehicle state/HMI). In some cases, it requires an additional NFC touch point to perform NFC functions while WPC is running. The fact that NFC and WPC are not working in parallel is inconvenient for the users. The proposed invention seeks to define a mechanism to enable NFC and WPC multiplexing in an automatic way, on the same touch point.

Overall, the example shows how an algorithm which enables simultaneous NFC communication and Qi Wireless Charging on the same touchpoint is provided by the invention.

### Reference signs

- 1: station
- 2: shelf
- 3: charging loop antenna
- 4: communication loop antenna
- 5: control unit
- 6: battery
- 7: electromagnetic charging field
- 8: electromagnetic communication field
- 9: mobile device
- 10: charging antenna
- 11: communication antenna
- 12: charging request
- 13: communication request
- 14: vehicle
- S1: start of the method
- S2: communication test
- S3: charging test
- S4: communication mode
- S5: starting use case
- S6: Bluetooth pairing use case
- S7: Wi-Fi pairing use case
- S8: standard charging mode
- S9: reduced charging mode

## Claims

1. Station (1) for charging a mobile device (9), wherein
- the station (1) is configured to operate in a communication mode (S4) and in a charging mode (S8),
- the station (1) is configured to operate the communication mode (S4) and the standard charging mode (S8) in a mutual exclusive manner by excluding the operation of both the communication mode (S4) and the standard charging mode (S8) at the same time,
- in the communication mode (S4), the station (1) is configured to wirelessly send data to the mobile device (9) and/or to wirelessly receive data from the mobile device (9) according to a predefined wireless communication protocol, and
- in the standard charging mode (S8), the station (1) is configured to wirelessly charge the mobile device (9) according to a predefined wireless charging protocol,
- the station (1) is configured to activate the communication mode (S4), when a communication test (S2) regarding a presence of a communication request (13) is positive, and
- the station (1) is configured to activate the standard charging mode (S8), when a charging test (S3) regarding a presence of a charging request (12) is positive,
**characterized in that**
- the station (1) is configured to perform both the communication test (S2) and the charging test (S3) in a cyclic main loop and, if one of the tests (S2, S3) is positive, to interrupt the cyclic main loop.

2. Station (1) as claimed in claim 1, wherein the station (1) is configured to resume the main loop, when the communication mode (S4) and the standard charging mode (S8) are deactivated.

3. Station (1) as claimed in any preceding claim, wherein the wireless communication protocol comprises the Near Field Communication protocol.

4. Station (1) as claimed in any preceding claim, where the wireless charging protocol comprises the Qi protocol.

5. Station (1) as claimed in any preceding claim, wherein
- the station (1) is configured to operate in a reduced charging mode (S9), wherein a transfer power of the reduced charging mode (S9) is below a transfer power of the standard charging mode (S8), and
- the station (1) is configured to operate in the reduced charging mode (S9) and the communication mode (S4) simultaneously.

6. Station (1) as claimed in any preceding claim, wherein starting from the standard charging mode (S8), the station (1) is configured to perform a cyclic auxiliary loop which comprises
- interrupting the standard charging mode (S8),
- performing the communication test (S2) and,
- if the test is negative, continuing the standard charging mode (S8), and
- if the test is positive, interrupting the cyclic auxiliary loop and switching into the communication mode (S4).

7. Station (1) as claimed in claim 6 in connection with claim 5, wherein the station (1) is configured to activate the reduced wireless charging mode (S9), during the interruption of the cyclic auxiliary loop.

8. Station (1) as claimed in claim 7, wherein the station (1) is configured to continue the cyclic auxiliary loop, when the communication mode (S4) is deactivated.

9. Vehicle (14) comprising a station (1) for charging a mobile device (9) as claimed in any preceding claim.

10. Method to operate a station (1) for charging a mobile device (9) as claimed in claims 1 to 8, comprising the steps of:
- alternatingly performing both a communication test (S2) and a charging test (S3) in a cyclic main loop and if one of the tests (S2, S3) is positive to interrupt the cyclic main loop,
- activation of a communication mode (S4), when the communication test (S2) regarding a presence of a communication request (13 is positive,
- activation of a charging mode (S8), when the charging test (S3) regarding a presence of a charging request (12) is positive,
- in the communication mode (S4), wirelessly sending data to the mobile device (9) and/or wirelessly receiving data from the mobile device (9) according to a predefined wireless communication protocol,
- in the standard charging mode (S8), wirelessly charging the mobile device (9) according to a predefined wireless charging protocol, wherein
- the station (1) operates the communication mode (S4) and the standard charging mode (S8) in a mutual exclusive manner by excluding the operation of both the communication mode (S4) and the standard charging mode (S8) at the same time.

11. Method according to claim 10, wherein the station (1) is designed to operate the communication mode (S4) and/or the communication test (S2) together with a reduced charging mode (S9) at the same time, wherein the reduced charging mode (S9) comprises a power transfer with a lower power than the standard charging mode (S8).
